# EUROPEAN PATENT SPECIFICATION

(11) **EP 1 645 132 B1**
(45) Date of publication and mention of the grant of the patent: **17.11.2010**
(21) Application number: 04731325.9
(22) Date of filing: 06.05.2004
(51) Int. Cl.: H04N 7/24, H04N 5/00

(54) **METHOD AND APPARATUS FOR DECODING A DATA STREAM IN AUDIO VIDEO STREAMING SYSTEMS**
VERFAHREN UND VORRICHTUNG ZUM DEKODIEREN EINES DATENSTROMES IN AUDIO-VIDEOÜBERTRAGUNGSSYSTEMEN
METHODE ET APPAREIL POUR DECODER UN FLUX DE DONNEES DANS UN SYSTEME DE TRANSMISSION AUDIO-VIDEO

(30) Priority: 14.07.2003 EP 03015991
(43) Date of publication of application: 12.04.2006
(73) Proprietor: Thomson Licensing, 92130 Issy-les-Moulineaux (FR)
(72) Inventor: SCHMIDT, Jürgen, 31515 Wunstorf (DE)
(74) Representative: Rittner, Karsten
(86) International application number: PCT/EP2004/004795
(87) International publication number: WO 2005/006757

(56) References cited:
- EP-A- 1 133 189
- WO-A-98/36559
- "Information Technology - Generic Coding of moving pictures and audio:systems Amendment 3: AudioBIFS Extensions" December 2003 (2003-12), ISO/IEC 14496-11/2003 PDAM 3, N6207 , WAIKOLOA, HAWAI , XP002267524 page 1, line 1 - page 2, line 10 table 1 * reason for citation: document discloses AdvancedAudioBuffer, published after filing date *
- "INFORMATION TECHNOLOGY-CODING OF AUDIO-VISUAL OBJECTS- PART 1: SYSTEMS" March 2002 (2002-03), ISO/IEC 14496-1:2001.1, N4699, PAGE(S) I, XI-XV,1-15, 151-153, 258-267 , XP002267593 cited in the application page 9; figure 2 * section 9.4.2.7 AudioBuffer *

## Description

This invention relates to a method and apparatus for decoding a data stream in a buffering node for multimedia streaming systems, like MPEG-4.

### Background

In the MPEG-4 standard ISO/IEC 14496, in particular in part 1 Systems, an audio/video (AV) scene can be composed from several audio, video and synthetic 2D/3D objects that can be coded with different MPEG-4 format coding types and can be transmitted as binary compressed data in a multiplexed bitstream comprising multiple substreams. A substream is also referred to as Elementary Stream (ES), and can be accessed through a descriptor. ES can contain AV data, or can be so-called Object Description (OD) streams, which contain configuration information necessary for decoding the AV substreams. The process of synthesizing a single scene from the component objects is called composition, and means mixing multiple individual AV objects, e.g. a presentation of a video with related audio and text, after reconstruction of packets and separate decoding of their respective ES. The composition of a scene is described in a dedicated ES called 'Scene Description Stream', which contains a scene description consisting of an encoded tree of nodes called Binary Information For Scenes (BIFS). 'Node' means a processing step or unit used in the MPEG-4 standard, e.g. an interface that buffers data or carries out time synchronization between a decoder and subsequent processing units. Nodes can have attributes, referred to as fields, and other information attached. A leaf node in the BIFS tree corresponds to elementary AV data by pointing to an OD within the OD stream, which in turn contains an ES descriptor pointing to AV data in an ES. Intermediate nodes, or scene description nodes, group this material to form AV objects, and perform e.g. grouping and transformation on such AV objects. In a receiver the configuration substreams are extracted and used to set up the required AV decoders. The AV substreams are decoded separately to objects, and the received composition instructions are used to prepare a single presentation from the decoded AV objects. This final presentation, or scene is then played back.

According to the MPEG-4 standard, audio content can only be stored in the 'audioBuffer' node or in the 'mediaBuffer' node. Both nodes are able to store a single data block at a time. When storing another data block, the previously stored data block is overwritten.

The 'audioBuffer' node can only be loaded with data from the audio substream when the node is created, or when the 'length' field is changed. This means that the audio buffer can only be loaded with one continuous block of audio data. The allocated memory matches the specified amount of data. Further, it may happen that the timing of loading data samples is not exactly due to the timing model of the BIFS decoder.

For loading more than one audio sample, it is possible to build up an MPEG-4 scene using multiple 'audioBuffer' nodes. But it is difficult to handle the complexity of the scene, and to synchronize the data stored in the different 'audioBuffer' nodes. Additionally, for each information a new stream has to be opened.

WO 98/36559 discloses an object-based audio-visual terminal and bitstream structure. The object-oriented bitstream includes objects, composition information and stream demarcation information. The terminal comprises a cache in which objects are stored for use beyond their presentation time.

### Summary of the Invention

The problem to be solved by the invention is to improve storage and retrieval of single or multiple data blocks in multimedia buffer nodes in streaming systems, like MPEG-4.

This problem is solved by the present invention as disclosed in claim 1. An apparatus using the inventive method is disclosed in claim 8.

According to the invention, additional parameters are added to the definition of a multimedia buffer node, e.g. audio or video node, so that multiple data blocks with AV contents can be stored and selectively processed, e.g. included into a scene, updated or deleted. In the case of MPEG-4 these additional parameters are new fields in the description of a node, e.g. in the 'audioBuffer' node or 'mediaBuffer' node. The new fields define the position of a data block within a received data stream, e.g. audio stream, and how to handle the loading of this block, e.g. overwriting previously stored data blocks or accumulating data blocks in a buffer.

### Brief description of the drawings

Exemplary embodiments of the invention are described with reference to the accompanying drawings, which show in
Fig.1 the general structure of an MPEG-4 scene;
Fig.2 an exemplary 'AdvancedAudioBuffer' node for MPEG-4; and
Fig.3 the fields within an exemplary 'Advanced Audio Buffer' node for MPEG-4.

### Detailed description of the invention

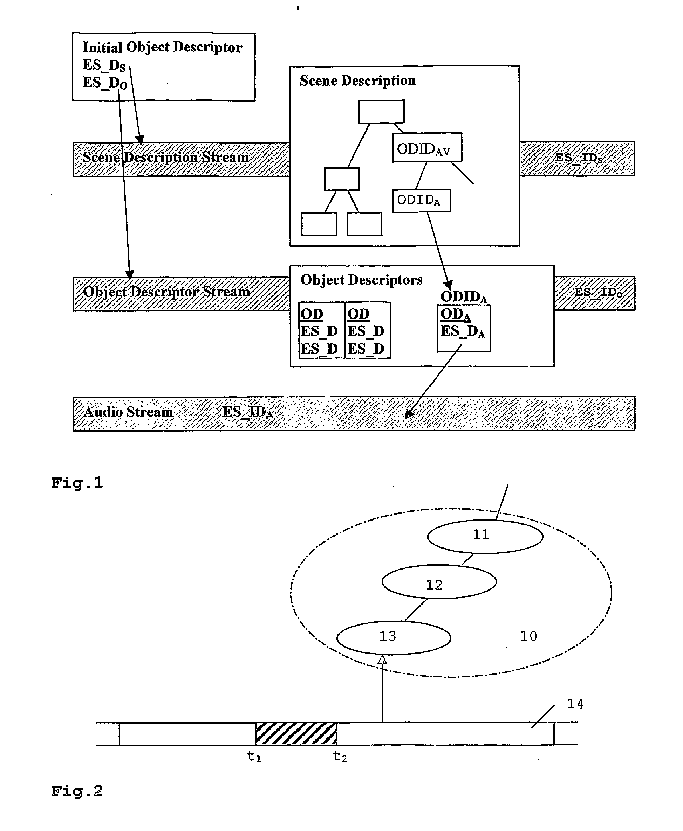

Fig.1 shows the composition of an MPEG-4 scene, using a scene description received in a scene description stream ES_IDₛ. The scene comprises audio, video and other data, and the audio and video composition is defined in an AV node ODID_{AV}. The audio part of the scene is composed in an audio compositor, which includes an AdvancedAudioBuffer node and contains a reference ODID_{A} to an audio object, e.g. decoder. The actual audio data belonging to this audio object are contained as packets in an ES, namely the audio stream, which is accessible through its descriptor ES_D_{A}. The AdvancedAudioBuffer node may pick out multiple audio data packets from the audio stream ES_ID_{A} coming from an audio decoder.

The audio part of an MPEG-4 scene is shown in more detail in Fig.2. The audio part of a scene description 10 contains a sound node 11 that has an AdvancedAudioBuffer node 12, providing an interface for storing audio data. The audio data to be stored consist of packets within the audio stream 14, which is received from an audio decoder. For each data packet is specified at which time it is to be decoded. The AdvancedAudioBuffer node 12 holds the time information for the packets to load, e.g. start time t₁ and end time t₂. Further, it can identify and access the required ES by referring to an AudioSource node 13. The AdvancedAudioBuffer node may buffer the specified data packet without overwriting previously received data packets, as long as it has sufficient buffer capacity.

The AdvancedAudioBuffer node 12 can be used instead of the AudioBuffer node defined in subclause 9.4.2.7 of the MPEG-4 systems standard ISO/IEC 14496-1:2002. As compared to the AudioBuffer node, the inventive AdvancedAudioBuffer node has an enhanced load mechanism that allows e.g. reloading of data.

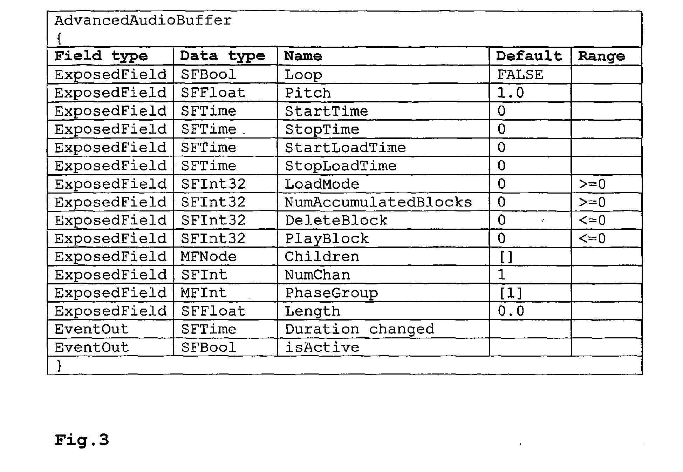

The AdvancedAudioBuffer node can be defined using the MPEG-4 syntax, as shown in Fig.3. It contains a number of fields and events. Fields have the function of parameters or variables, while events represent a control interface to the node. The function of the following fields is described in ISO/IEC 14496-1:2002, subclause 9.4.2.7: 'loop', 'pitch', 'startTime', 'stopTime', 'children', 'numChan', 'phaseGroup', , 'length' 'duration_changed' and 'isActive'. The 'length' field specifies the length of the allocated audio buffer in seconds. In the current version of the mentioned standard this field cannot be modified. This means that another AudioBuffer node must be instantiated when another audio data block shall be loaded, since audio data is buffered at the instantiation of the node. But the creation of a new node is a rather complex software process, and may result in a delay leading to differing time references in the created node and the BIFS tree.

The following new fields, compared to the AudioBuffer node, are included in the AdvancedAudioBuffer node: 'startLoadTime', 'stopLoadTime', 'loadMode', 'numAccumulatedBlocks', 'deleteBlock' and `playBlock'. With these new fields it is possible to enable new functions, e.g. load and delete stored data. Further, it is possible to define at node instantiation time the buffer size to be allocated, independently from the actual amount of data to be buffered. The buffer size to be allocated is specified by the 'length' field. The 'startTime' and 'stopTime' fields can be used alternatively to the 'startLoadTime' and 'stopLoadTime' fields, depending on the mode described in the following.

Different load mechanisms may exist, which are specified by the field 'loadMode'. The different load modes are e.g. Compatibility mode, Reload mode, Accumulate mode, Continuous Accumulate mode and Limited Accumulate mode.

In Compatibility mode, audio data shall be buffered at the instantiation of the AdvancedAudioBuffer node, and whenever the length field changes. The 'startLoadTime', 'stopLoadTime', 'numAccumulatedBlocks', 'deleteBlock' and 'playBlock' fields have no effect in this mode. The 'startTime' and 'stopTime' fields specify the data block to be buffered.

In Reload mode, the 'startLoadTime' and 'stopLoadTime' fields are valid. When the time reference of the AdvancedAudioBuffer node reaches the time specified in the 'startLoadTime' field, the internal data buffer is cleared and the samples at the input of the node are stored until value in the 'stopLoadTime' field is reached, or the stored data have the length defined in the 'length' field. If the 'startLoadTime' value is higher or equal to the 'stopLoadTime' value, a data block with the length defined in the 'length' field will be loaded at the time specified in 'startLoadTime'. The 'numAccumulatedBlocks', 'deleteBlock' and 'playBlock' fields have no effect in this mode.

In the Accumulate mode a data block defined by the interval between the 'startLoadTime' and 'stopLoadTime' field values is appended at the end of the buffer contents. In order to have all data blocks accessible, the blocks are indexed, or labeled, as described below. When the limit defined by the 'length' field is reached, loading is finished. The field 'numAccumulatedBlocks' has no effect in this mode.

In the Continuous Accumulate mode a data block defined by the interval between the 'startLoadTime' and 'stopLoadTime' field values is appended at the end of the buffer contents. All data blocks in the buffer are indexed to be addressable, as described before. When the limit defined by the 'length' field is reached, the oldest stored data may be discarded, or overwritten. The field 'numAccumulatedBlocks' has no effect in this mode.

In the Limited Accumulate mode is similar to the Accumulate mode, except that the number of stored blocks is limited to the number specified in the 'numAccumulatedBlocks' field. In this mode, the 'length' field has no effect.

For some of the described load mechanisms, a transition from 0 to a value below 0 in the 'deleteBlock' field starts deleting of a data block, relative to the latest data block. The latest block is addressed with -1, the block before it with -2 etc. This is possible e.g. in the following load modes: Accumulate mode, Continuous Accumulate mode and Limited Accumulate mode.

Since the inventive buffer may hold several data blocks, it is advantageous to have a possibility to select a particular data block for reproduction. The 'playBlock' field defines the block to be played. If the 'playBlock' field is set to 0, as is done by default, the whole content will be played, using the 'startTime' and 'stopTime' conditions. This is the above-mentioned Compatibility mode, since it is compatible to the function of the known MPEG-4 system. A negative value of 'playBlock' addresses a block relative to the latest block, e.g. the latest block is addressed with -1, the previous block with -2 etc.

It is an advantage of the inventive method that a buffer node can be reused, since loading data to the node is faster than in the current MPEG-4 standard, where a new node has to be created before data can be buffered. Therefore it is easier for the AdvancedAudioBuffer node to match the timing reference of the BIFS node, and thus synchronize e.g. audio and video data in MPEG-4.

An exemplary application for the invention is a receiver that receives a broadcast program stream containing various different elements, e.g. traffic information. From the audio stream, the packets with traffic information are extracted. With the inventive MPEG-4 system it is possible to store these packets, which are received discontinuously at different times, in the receiver in a way that they can be accumulated in its buffer, and then presented at a user defined time. E.g. the user may have an interface to call the latest traffic information message at any time, or filter or delete traffic information messages manually or automatically. On the other hand, also the broadcaster can selectively delete or update traffic information messages that are already stored in the receivers data buffer.

Advantageously, the invention can be used for all kinds of devices that receive data streams composed of one or more control streams and one or more multimedia data streams, and wherein a certain type of information is divided into different blocks sent at different times. Particularly these are broadcast receivers and all types of music rendering devices.

The invention is particularly good for receivers for MPEG-4 streaming systems.

## Claims

1. Method for decoding a data stream, the data stream containing a first and a second substream, the first substream (14) containing first and second multimedia data packets and the second substream containing control information (10) , wherein the multimedia data packets contain an indication of the time when to be presented and are decoded prior to the indicated presentation time, and wherein the first decoded multimedia data packets are buffered at least until, after a further processing, they can be presented in due time, and the second multimedia data packets are also buffered, **characterized in**
- the second multimedia data packets either replacing or being appended to the first decoded multimedia data packets in the buffer;
- said control information containing first, second and third control data;
- the first control data defining the allocated buffer size;
- the second control data defining whether the second multimedia data packets are appended to the first multimedia data packets or replace them; and
- the third control data defining one or more multimedia data packets to be buffered.

2. Method according to claim 1, wherein the second control data defines one of a plurality of operation modes, wherein in a first mode buffering of multimedia data packets is performed when the value of the first control data changes, and in a second and third mode the third control data are valid for specifying the multimedia data packets to be buffered, wherein in the second mode the multimedia data packets replace the buffer contents and in the third mode the multimedia data packets are appended to the buffer contents.

3. Method according to claim 2, wherein the third mode has two variations, wherein in the first variation the buffering of multimedia data packets stops when the buffer is full, and in the second variation previously buffered data may be overwritten when the buffer is full.

4. Method according to any of claims 1-3, wherein the method is utilized in an instance of a processing node and wherein the first control data defines the allocated buffer size at node creation time.

5. Method according to any of claims 1-4, wherein labels are attached to the buffered first and other multimedia data packets, and the packets may be accessed through their respective label.

6. Method according to the preceding claim, wherein a label attached to the buffered data packets contains an index relative to the latest received data packet.

7. Method according to any of claims 1-6, wherein the first substream contains audio data and the second substream contains a description of the presentation.

8. Apparatus for decoding a data stream, the data stream containing a first and a second substream, the first substream (14) containing first and second multimedia
data packets and the second substream containing control information (10), wherein the multimedia data packets contain an indication of the time when to be presented and wherein the first and second multimedia data packets are buffered, **characterized in** containing
- buffering means for said buffering of the first and the second multimedia data packets, wherein the second multimedia data packets may in a first mode replace and in a second mode be appended to the first multimedia data packets;
- means for extracting from said control information (10) first, second and third control data;
- means for applying the first control data to define the allocated buffer size;
- means for applying the second control data to define whether the second multimedia data packets are appended to the first multimedia data packets or replace them; and
- means for applying the third control data to define a multimedia data packet to be buffered.

9. Apparatus according to claim 8, further comprising means for attaching labels to the buffered multimedia data packets, and means for accessing, retrieving or deleting the packets through their respective label.

10. Apparatus according to claim 8 or 9, wherein the data stream is an MPEG-4 compliant data stream.

## Patentansprüche

1. Verfahren zum Decodieren eines Datenstroms, wobei der Datenstrom einen ersten und einen zweiten Unterstrom enthält, wobei der erste Unterstrom (14) erste und zweite Multimediadatenpakete enthält und der zweite Unterstrom Steuerinformationen (10) enthält, wobei die Multimediadatenpakete eine Angabe der Zeit enthalten, wann sie dargestellt werden sollen, und vor der angegebenen Darstellungszeit decodiert werden, und wobei die ersten decodierten Multimediadatenpakete mindestens so lange gepuffert werden, bis sie nach einer Weiterverarbeitung rechtzeitig dargestellt werden können, und wobei die zweiten Multimediadatenpakete ebenfalls gepuffert werden, **dadurch gekennzeichnet, dass**
- die zweiten Multimediadatenpakete die ersten decodierten Multimediadatenpakete in dem Puffer entweder ersetzen oder an sie angehängt werden;
- die Steuerinformationen erste, zweite und dritte Steuerdaten enthalten;
- die ersten Steuerdaten die zugeordnete Puffergröße definieren;
- die zweiten Steuerdaten definieren, ob die zweiten Multimediadatenpakete an die ersten Multimediadatenpakete angehängt werden oder sie ersetzen; und
- die dritten Steuerdaten eines oder mehrere Multimediadatenpakete definieren, die gepuffert werden sollen.

2. Verfahren nach Anspruch 1, bei dem die zweiten Steuerdaten eine von einer Mehrzahl von Betriebsarten definieren, wobei in einer ersten Betriebsart eine Pufferung von Multimediadatenpaketen ausgeführt wird, wenn sich der Wert der ersten Steuerdaten ändert, und in einer zweiten und in
einer dritten Betriebsart die dritten Steuerdaten gültig sind, um die zu puffernden Multimediadatenpakete zu spezifizieren, wobei die Multimediadatenpakete in der zweiten Betriebsart den Pufferinhalt ersetzen und die Multimediadatenpakete in der dritten Betriebsart an den Pufferinhalt angehängt werden.

3. Verfahren nach Anspruch 2, bei dem die dritte Betriebsart zwei Abwandlungen aufweist, wobei in der ersten Abwandlung die Pufferung der Multimediadatenpakete anhält, wenn der Puffer voll ist, und in der zweiten Abwandlung zuvor gepufferte Daten überschrieben werden können, wenn der Puffer voll ist.

4. Verfahren nach einem der Ansprüche 1-3, bei dem das Verfahren in einem Fall eines Verarbeitungsknotens genutzt wird und bei dem die ersten Steuerdaten die zugeordnete Puffergröße zur Knotenerzeugungszeit definieren.

5. Verfahren nach einem der Ansprüche 1-4, bei dem an den gepufferten ersten und anderen Multimediadatenpaketen Etiketten angebracht werden und auf die Pakete über ihre jeweiligen Etiketten zugegriffen werden kann.

6. Verfahren nach dem vorhergehenden Anspruch, bei dem ein an den gepufferten Datenpaketen angebrachtes Etikett einen Index relativ zu dem letzten empfangenen Datenpaket enthält.

7. Verfahren nach einem der Ansprüche 1-6, bei dem der erste Unterstrom Audiodaten enthält und der zweite Unterstrom eine Beschreibung der Darstellung enthält.

8. Vorrichtung zum Decodieren eines Datenstroms, wobei der Datenstrom einen ersten und einen zweite Unterstrom enthält, wobei der erste Unterstrom (14) erste und zweite Multimediadatenpakete enthält und der zweite Unterstrom Steuerinformationen (10) enthält, wobei die Multimediadatenpakete eine Angabe der Zeit enthalten, wann sie dargestellt werden sollen, und wobei die ersten und die zweiten Multimediadatenpakete gepuffert werden, **dadurch gekennzeichnet, dass** die Vorrichtung enthält:
- Puffermittel für die Pufferung der ersten und der zweiten Multimediadatenpakete, wobei die zweiten Multimediadatenpakete die ersten Multimediadatenpakete in einer ersten Betriebsart ersetzen können und in einer zweiten Betriebsart an sie angehängt werden können;
- Mittel zum Entnehmen erster, zweiter und dritter Steuerdaten aus den Steuerinformationen (10);
- Mittel zum Anwenden der ersten Steuerdaten zum Definieren der zugeordneten Puffergröße;
- Mittel zum Anwenden der zweiten Steuerdaten zum Definieren, ob die zweiten Multimediadatenpakete an die ersten Multimediadatenpakete angehängt werden oder sie ersetzen; und
- Mittel zum Anwenden der dritten Steuerdaten zum Definieren eines Multimediadatenpakets, das gepuffert werden soll.

9. Vorrichtung nach Anspruch 8, die ferner Mittel zum Anbringen von Etiketten an den gepufferten Multimediadatenpaketen und Mittel zum zugreifen auf die Pakete, zum Wiedergewinnen der Pakete oder zum Löschen der Pakete über ihr jeweiliges Etikett umfasst.

10. vorrichtung nach Anspruch 8 oder 9, bei der der Datenstrom ein MPEG-4-konformer Datenstrom ist.

## Revendications

1. Méthode pour décoder un flux de données, le flux de données contenant un premier et un deuxième sous-flux, le premier sous-flux (14) contenant des premiers et deuxièmes paquets de données multimédia et le deuxième sous-flux contenant des informations de commande (10), où les paquets de données multimédia contiennent une indication de l'heure à laquelle ils doivent être présentés et sont décodés avant l'heure de présentation indiquée, et où les premiers paquets de données multimédia décodés sont mis en mémoire tampon au moins jusqu'à, après un traitement supplémentaire, ce qu'ils puissent être présentés en temps et en heure, et les deuxièmes paquets de données multimédia sont également mis en mémoire tampon, **caractérisé en ce que**
- les deuxièmes paquets de données multimédia remplacent ou sont joints aux premiers paquets de données multimédia décodés dans la mémoire tampon ;
- lesdites informations de commande contiennent des premiers, des deuxièmes et des troisièmes données de commande ;
- les premières données de commande définissent la taille de mémoire tampon attribuée ;
- les deuxièmes données de commande définissent si les deuxièmes paquets de données multimédia sont joints aux premiers paquets de données multimédia ou les remplacent ; et
- les troisièmes données de commande définissent un ou plusieurs paquets de données multimédia devant être mis en mémoire tampon,

2. Méthode selon la revendication 1, où les deuxièmes données de commande définissent un parmi une pluralité de modes de fonctionnement, où dans un premier mode, une mise en mémoire tampon de paquets de données multimédia est réalisée lorsque la valeur des premières données de commande change, et dans un deuxième et troisième mode, les troisièmes données de commande sont valides pour spécifier les paquets de données multimédia devant être mis en mémoire tampon, où dans le deuxième mode, les paquets de données multimédia remplacent les contenus de la mémoire tampon et dans le troisième mode, les paquets de données multimédia sont joints aux contenus de la mémoire tampon.

3. Méthode selon la revendication 2, où le troisième mode présente deux variations, où dans la première variation, la mise en mémoire tampon de paquets de données multimédia est interrompue lorsque la mémoire tampon est pleine, et dans la deuxième variation, des données mises en mémoire tampon précédemment peuvent être écrasées lorsque la mémoire tampon est pleine.

4. Méthode selon une quelconque des revendications 1 à 3, où la méthode est utilisée dans une instance d'un noeud de traitement et où les premières données de commande définissent la taille de mémoire tampon attribuée au moment de la création du noeud,

5. Méthode selon une quelconque des revendications 1 à 4, où des étiquettes sont jointes aux premiers et autres paquets de données multimédia mis en mémoire tampon, et les paquets sont accessibles via leur étiquette respective.

6. Méthode selon la revendication précédente, où une étiquette jointe aux paquets de données mis en mémoire tampon contient un indice par rapport au dernier paquet de données reçu.

7. Méthode selon une quelconque des revendications 1 à 6, où le premier sous-flux contient des données audio et le deuxième sous-flux contient une description de la présentation.

8. Appareil pour décoder un flux de données, le flux de données contenant un premier et un deuxième sous-flux, le premier sous-flux (14) contenant des premiers et deuxièmes paquets de données multimédia et le deuxième sous-flux contenant des informations de commande (10), où les paquets de données multimédia contiennent une indication de l'heure à laquelle ils doivent être présentés et où les premiers et deuxièmes paquets de données multimédia sont mis en mémoire tampon, **caractérisé en ce qu'**il contient
- un moyen de mise en mémoire tampon pour ladite mise en mémoire tampon des premiers et deuxièmes paquets de données multimédia, où les deuxièmes paquets de données multimédia peuvent dans un premier mode remplacer et dans un deuxième mode être joints aux premiers paquets de données multimédia ;
- un moyen pour extraire, à partir desdites informations de commande (10), des premières, deuxièmes et troisièmes données de commande ;
- un moyen pour appliquer les premières données de commande pour définir la taille de mémoire tampon attribuée ;
- un moyen pour appliquer les deuxièmes données de commande pour définir si les deuxièmes paquets de données multimédia sont joints aux premiers paquets de données multimédia ou les remplacent ; et
- un moyen pour appliquer les troisièmes données de commande pour définir un paquet de données multimédia devant être mis en mémoire tampon.

9. Appareil selon la revendication 8, comprenant en outre un moyen pour joindre des étiquettes aux paquets de données multimédia mis en mémoire tampon, et un moyen pour accéder, récupérer ou supprimer les paquets via leur étiquette respective.

10. Appareil selon la revendication 8 ou 9, où le flux de données est un flux de données conforme à la norme MPEG-4.
